# EUROPEAN PATENT APPLICATION

(11) **EP 4 806 850 A1**
(43) Date of publication of application: **16.09.2026**
(21) Application number: 26161902.7
(22) Date of filing: 03.03.2026
(51) Int. Cl.: C02F 1/00

(54) **MEASUREMENT DEVICE, MEASUREMENT METHOD, MEASUREMENT PROGRAM, AND WATER TREATMENT SYSTEM**

(30) Priority: 11.03.2025 JP 2025038123
(71) Applicant: Yokogawa Electric Corporation, Musashino-shi, Tokyo 180-8750 (JP)
(72) Inventor: MATSUI, Yasuhiro, Musashino-shi, Tokyo, 180-8750 (JP)
(74) Representative: Winter, Brandl - Partnerschaft mbB

(57) **Abstract**

A measurement device (70) includes a detector (72) and a processor. The detector (72) has a configuration that reduces effect of contact with water, and performs detection related to the water. The processor performs an arithmetic operation on the water in a water treatment process based on a detection result obtained by the detector (72).

## Description

### BACKGROUND

The present invention relates to a measurement device, a measurement method, a measurement program, and a water treatment system.

Conventionally, there is a known water treatment system (water treatment device) that is used to produce water of industrial water, drinking water, and ultrapure water by performing an advanced water treatment on recycled sewage water by making full use of autonomous optimization. Furthermore, recently, an autonomous operation of the water treatment system using artificial intelligence (Al) has been implemented.
Patent Document 1: Japanese Laid-open Patent Publication No. 2020-025943
Patent Document 2: Japanese Laid-open Patent Publication No. 2020-065964
Patent Document 3: Japanese Laid-open Patent Publication No. 2019-010614
Patent Document 4: Japanese Laid-open Patent Publication No. 2023-121593

However, in the conventional technology, there is a problem in that it is not possible to efficiently perform an operation of the water treatment system.

For example, in the conventional water treatment system, there may be a case in which a part of a measurement device comes into contact with treated water (measurement solution), and contamination or a deterioration occurs. In such a case, a personnel or a time cost is incurred to cope with the contamination or the deterioration, and the efficiency of the operation of the water treatment system decreases.

An object of the present disclosure is to make an operation of a water treatment system more efficient.

### SUMMARY

According to an aspect of an embodiment, a measurement device includes a detector and a processor, wherein the detector has a configuration that reduces effect of contact with water, and performs detection related to the water, and the processor performs an arithmetic operation on the water in a water treatment process based on a detection result obtained by the detector.

According to an aspect of an embodiment, a measurement method carried out by a computer includes acquiring a detection result that is obtained by a detector (72) having a configuration that reduces effect of contact with water and that is obtained from a water treatment process performed on the water, and performing an arithmetic operation based on the detection result.

According to an aspect of an embodiment, a measurement program that causes a computer to execute a process includes acquiring a detection result that is obtained by a detector having a configuration that reduces effect of contact with water and that is obtained from a water treatment process performed on the water, and
performing an arithmetic operation based on the detection result.

According to an aspect of an embodiment, a water treatment system includes a facility system that includes water treatment devices each of which performs a water treatment process, and a control device that performs control of each of the water treatment devices, and
a management system that includes a management device that determines control content of the water treatment process by using a virtual system constituted by virtualizing each of the water treatment devices, and that controls the water treatment process performed in the facility system based on the control content via the control device included in the facility system, wherein each of the water treatment devices includes a measurement device, each of the measurement devices includes a detector and a processor, each of the detectors has a configuration that reduces effect of contact with water, and performs detection related to the water, and each of the processors performs an arithmetic operation on the water in a water treatment process based on a detection result obtained by the corresponding detectors.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram for explaining an overall configuration of a water treatment system according to a first embodiment;
FIG. 2 is a diagram for explaining an architecture of a water treatment system according to a reference technology;
FIG. 3 is a functional block diagram illustrating a functional configuration of the water treatment system according to the first embodiment;
FIG. 4 is functional block diagram illustrating a functional configuration of a measurement device according to the first embodiment;
FIG. 5 is a flowchart illustrating the flow of a process performed by a facility system;
FIG. 6 is a flowchart illustrating the flow of a process performed by the management system;
FIG. 7 is a flowchart illustrating the flow of a process performed by the measurement device;
FIG. 8 is a diagram for explaining an architecture of a water treatment system according to a second embodiment;
FIG. 9 is a diagram for explaining an architecture of a water treatment system according to a third embodiment; and
FIG. 10 is a diagram for explaining an example of a hardware configuration.

### DESCRIPTION OF THE EMBODIMENTS

Hereinafter, preferred embodiments of a measurement device, a measurement method, a measurement program, and a water treatment system disclosed in the present application will be described in detail below with reference to the accompanying drawings. Furthermore, the present invention is not limited to the embodiments. Furthermore, by assigning the same reference numerals to the same components, overlapping descriptions thereof will be appropriately omitted. In addition, each of the embodiments may be used in any appropriate combination as long as they do not conflict with each other.

### Regarding water treatment system

The water treatment system that is used in a water purification plant or the like is configured by a combination of systems (level 0) that has four types of functions and that directly exerts an influence on water that is not a processing target. Furthermore, devices that respectively perform four types of functions are a device (Membrane) that physically performs a process of filtering water, a device (UV/Cl/Ozone) that chemically performs a process of oxidizing or disinfecting water, a device (Mechanical Components), such as a pipe, a pump, a valve, that controls and transports water, and a device (Control H&S) that includes a measurement device and software that are needed to control the quality of water, a water volume, a water temperature, a water pressure, and the like.

In the water treatment system as described above, a safe operation is performed by executing, on the basis of the logic in units of control using a Programmable Logic Controller (PLC) that is located at an upper level of each of the devices, various kinds of instructions on each of the above described devices that are located at a level lower than the PLC.

Incidentally, in a water treatment system that is used in recent years, an operation control performed by using artificial intelligence (AI) has been implemented. For example, in the operation control performed by using AI, the systems are gradually collected from each of the end devices that are the system located at a level 0 to systems that are located at a higher level, in a structured manner and in a step by step manner as input and output data, and finally, an AI engine (machine learning model) derives an optimized solution by imitating human thought, and an instruction is transmitted to each of the devices in accordance with the derived solution.

However, the water treatment system described above is a system that has been configured at a level equal to or lower than a level 1 and a level 2, and that is controlled by sequence control performed by the PLC, and, in general, proportional integral derivative (PID: P: proportional, I: integral, and D: derivative) control is used as the sequence control performed by the PLC. In this case, it is possible to assign an operating value corresponding to the load encountered by the system and execute a command to interrupt an operation or a command to avoid a trouble, but, on the other hand, the system is not designed for an automate operation utilizing AI, so that it is hard to say that an optimum automate operation has been implemented.

In contrast to this, with the water treatment system according to the embodiment, it is possible to implement an optimum automate operation.

### First Embodiment

### Overall configuration (architecture)

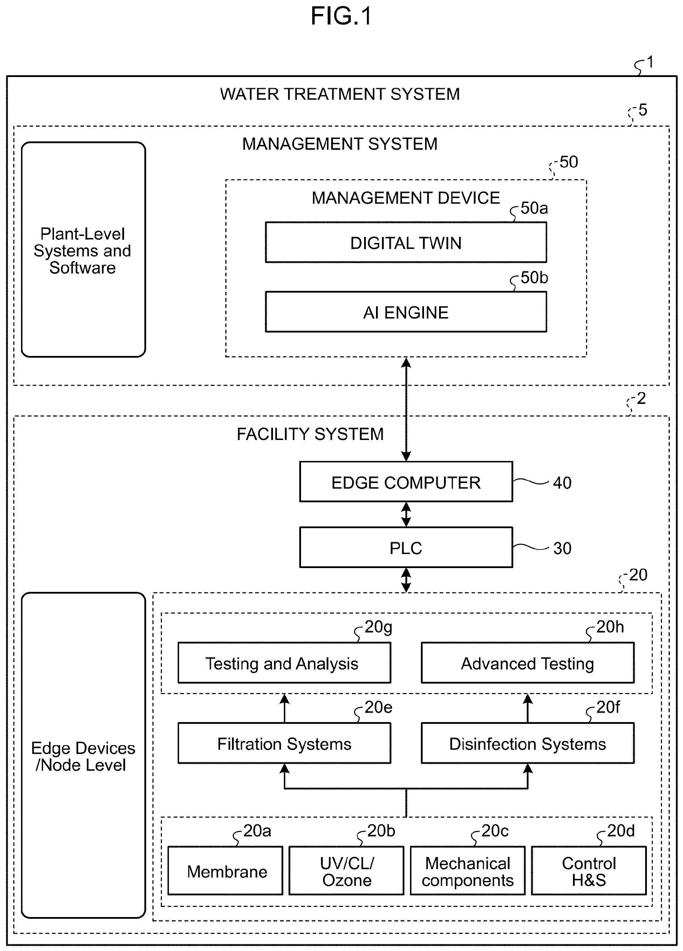

FIG. 1 is a diagram illustrating an overall configuration of the water treatment system according to a first embodiment. A water treatment system 1 illustrated in FIG. 1 is one example of a system that performs advanced water treatment, and that generates drinking water from discharged water, such as sewage and rainwater. The water treatment system 1 is constituted by broadly being classified into two categories. One of the categories is a management system 5 that corresponds to a Plant-Level-System and Software, and the other of categories is a facility system 2 that corresponds to an Edge Device/Node Level that constitutes an actual facility (actual system).

The facility system 2 includes water treatment devices each of which performs a water treatment process, and is connected to the management system 5 via a network N. Moreover, various networks, such as a dedicated line, a local area network (LAN), a virtual local area network (VLAN), and the Internet, may be used for the network N.

The facility system 2 includes a water treatment device group 20, a PLC 30, and an edge computer 40. The water treatment device group 20 includes edge devices at a node level. Here, in the edge devices at the node level, a Membranes 20a, an UV/Cl/Ozone 20b, a Mechanical components 20c, a Control H&S 20d, a Filtration Systems 20e, a Disinfection Systems 20f, a Testing and Analysis 20g, and an Advanced Testing 20h are included. Moreover, these devices are modularized, and are able to be individually controlled.

The Membranes 20a is a device that performs a process of physically filtering water. The UV/Cl/Ozone 20b is a device that performs a chemical advanced oxidation process or performs a process of disinfecting water. The Mechanical components 20c is a device, such as a pipe, a pump, or a valve, that controls transportation of water. The Control H&S 20d is a device that includes a measurement device and software that are needed to control the quality of water, a water volume, a water pressure, a water temperature, and the like.

The Filtration Systems 20e is a device (system) that is constituted by an arbitrary combination of each of the devices 20a to 20d described above, and that performs filtration on water. The Disinfection Systems 20f is a device (system) that is constituted by an arbitrary combination of each of the devices 20a to 20d described above, and that performs disinfection on water by using ultraviolet rays, heat, or the like. The Testing and Analysis 20g is a device that performs a general test or a breakdown of pH, an electrical conductivity, turbidity, a water temperature, a light intensity of ultraviolet absorption, Chemical Oxygen Demand (COD), or nitrogen (ammoniac nitrogen, nitrate nitrogen, or total nitrogen), and the like. In contrast, each of the Filtration Systems 20e or the Disinfection System 20f is a device (system) that performs a physical or chemical water treatment process, or that performs these water treatment processes. The Testing and Analysis 20g is equipped with a function of mechanical process management (for example, on or off of a pump, opening or closing of a valve), a function of a measurement related to quality management (for example, a water volume, a water pressure, quality of water) of an operation, and is equipped with a function of an output and transmission of an analog or digital signal. The Advanced Testing 20h is a device that performs an advanced test and a breakdown of a polymerase chain reaction (PCR), total organic carbon (TOC), adenosine triphosphate (ATP), or the like on water that has been subjected to the process of filtration or disinfection or that has been subjected to both of the processes performed by the Filtration System 20e or the Disinfection Systems 20f, or performed by both of the systems. The Advanced Testing 20h is equipped with a function of a measurement related to management of the quality of water that is safe for humans out of the quality management of the operation, and is equipped with a function of an output and transmission of an analog or digital signal.

The PLC 30 is one example of a computer that performs the above described sequence control on each of the devices located at a level lower than the level 0, the level 1, and the level 2. Furthermore, the PLC 30 performs various kinds of instructions with respect to each of the water treatment devices in accordance with an instruction received from the edge computer 40 that is located at a further higher level.

The edge computer 40 performs operation control on the water treatment process that is performed in the facility system 2. For example, the edge computer 40 receives data, such as a control status, control content, a control result, and a processing status, of the water treatment process from the PLC 30, performs a simulation by using the received data and a prediction on the basis of a machine learning model by using the received data, and acquires a result of the state prediction or the like of the water treatment process. Then, the edge computer 40 uses the result of the state prediction of the water treatment process, and notifies the PLC 30 of the control content in order to improve the water treatment process, enhance quality, reduce the cost, adjust an amount of production, and the like.

The management system 5 is one example of a computer that controls the water treatment process by performing the overall control of the facility system 2, and includes a system and software located at a plant level. The management system 5 includes a management device 50. In the management device 50, a digital twin 50a that generates a virtual module (virtual system) imitating a system constituted at the level of the actual facility, and an AI engine 50b that controls the facility system 2 that is the actual facility by causing the digital twin 50a to operate are included. Moreover, the management system 5 is able to be implemented by a physical machine that is provided with a memory or a processor, cloud computing, or the like. The management device 50 is also able to be implemented by a physical machine, and is also able to be implemented by a virtual machine, a container, or the like that uses a virtual technology.

The digital twin 50a collects various kinds of information from the facility system 2 and each of the devices disposed in a physical space, and reproduces the physical space in a virtual space by using the various kinds of collected information. In other words, the digital twin 50a virtually constitutes the virtual system that simulates a fluctuation that is the same as that of the facility system 2 that is the actual facility. The virtual system simulated by the digital twin 50a is constituted by a virtual end device or a virtual module that is constituted of elements of the respective water treatment devices or is constituted of a combination of the elements. The virtual module is constituted by a virtual water treatment device corresponding to each of the water treatment devices included in the facility system 2 that is the actual facility.

Furthermore, on the virtual system, it is possible to set and update a parameter by which a relationship of cause and effect of an input and an output is able to be directly or indirectly calculated with respect to the virtual end device or the virtual module, on the basis of pieces of data on the actual facility collected in advance of data transmitted from the actual facility one after another. The setting and the update of the parameter is performed by the AI engine 50b that will be described later.

Moreover, the digital twin 50a is able to form a virtual system by freely combining each of the virtual water treatment devices provided with the modules or freely and virtually combining the modules.

The AI engine 50b is able to derive a virtual operation condition that is optimum for various environments and is also able to calculate input and output values by causing the virtual system constituted on the digital twin 50a to check the modules constituted of the respective virtual water treatment devices, in addition to the configuration constituted by imitating the actual facility. Then, the AI engine 50b outputs an optimum virtual operation condition and input and output values to an administrator, or the like, and performs a parameter update by notifying the edge computer 40 of the update.

Furthermore, on the virtual system that is implemented by the digital twin 50a, the AI engine 50b simulates a sudden fluctuation on the virtual system, and identifies a configuration of an optimum system. Then, the AI engine 50b outputs a change in the optimum configuration to be performed on the system to the administrator or the like, and updates the parameter that is used to perform a simulation or the like by the edge computer 40.

Furthermore, the AI engine 50b is also able to use a machine learning model or the like that uses deep learning. Moreover, the management device 50 may be implemented by a cloud system, or may be arranged in the module. The management device 50 may also have a function of displaying a schematic diagram representing a configuration of the virtual system, or a schematic diagram representing a configuration of the actual system, or a function of displaying input and output values or the parameters for each of the water treatment devices, each of the modules, each of the virtual water treatment devices, or each of the water treatment modules.

### Explanation and problems in reference technology

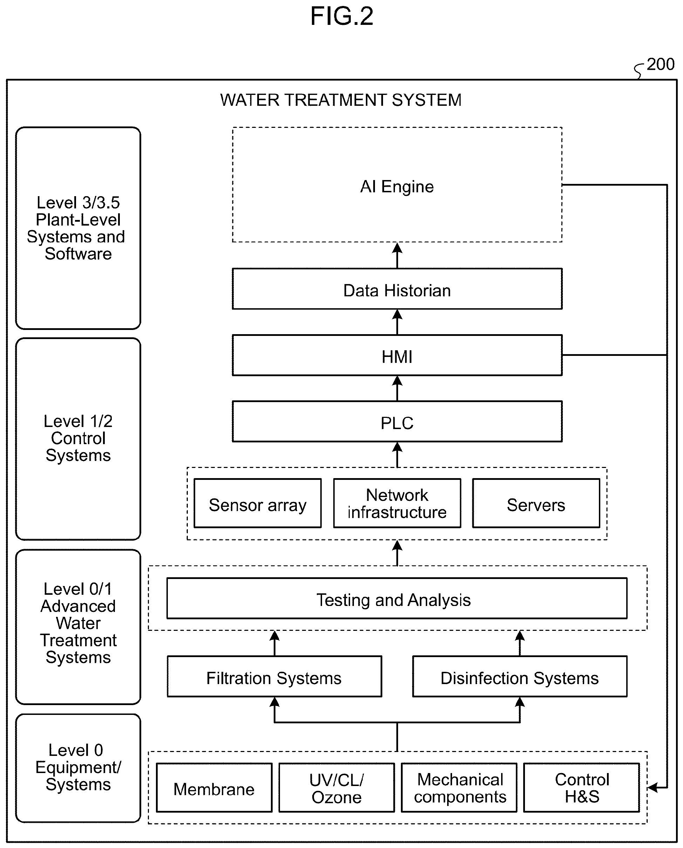

In the following, a water treatment system that is generally used will be described as a reference technology. FIG. 2 is a diagram illustrating an architecture of a water treatment system 200 according to the reference technology. As illustrated in FIG. 2, the water treatment system 200, such as a water purification plant, is constituted of a device and a system located at the level 0, an advanced water treatment clarification system located at each of the level 0 and the level 1, and a control system located at each of the level 1 and the level 2, and a system and software located at a plant level of each of a level 3 and a level 3.5.

This type of the water treatment system 200 is constructed with a modular configuration as the systems constituted to be located at the level 1 and the level 2, such as the Filtration Systems and the Disinfection Systems, by combining the system constituted to be located at the level 0 in order to perform the overall control of the system in accordance with water to be treated, an installation environment, and the aim of the process.

Furthermore, in the water treatment system 200, a test and an analysis (Testing and Analysis) are performed on the modular system constituted at the level 0 or the modular systems constituted at the level 0 and the level 1. In addition, the systems constituted at the level 1 and the level 2 that are the systems constituted at a higher level include a server or the like that controls a transmission and a reception of data between a sensor array (Sensor Array) and a network infrastructure, and receive test data or breakdown data on the test or the breakdown performed by the modular system at the level 0 or the modular systems at the level 0 and the level 1.

Furthermore, in the systems located at the level 1 and the level 2, a PLC in which the functions of the level 1 and the level 2 are integrated, and a human machine interface (HMI) for manually operating the entirety of the system by a person by collectively gathering the pieces of information that are collected and transmitted from the PLC are included.

In recent years, human control performed via the HMI has been further advanced, and a more stable operation of a water treatment system has been implemented by introducing a system, in which an artificial intelligence (AI) engine using machine learning (ML) is mounted, as systems located at the level 3 and the level 3.5 that are higher levels. In this case, between the interfaces from the systems located at the level 1 and the level 2 to the systems located at the level 3 and the level 3.5, a Data Historian is provided. With this Data Historian, it is possible to implement the overall control of the water treatment system performed by AI instead of humans by causing the AI to train the control that has relied on human experiences.

As described above, in the water treatment system 200 that is the reference technology, the systems are gradually collected from each of the end devices (the system located at the level 0) to the systems located at a higher level in a structured manner and in a step by step manner as input and output data. The water treatment system 200 is a system in which the AI engine finally derives an optimized solution by imitating human thought and transmits an instruction to each of the devices (system located at the level 0) by using the solution.

However, this type of the water treatment system 200 is constituted by the systems located at the level lower than the level 1 or the level 2. Furthermore, these systems are not designed with a concept of an automate operation that utilizes AI. Before the development of AI through machine learning (ML), complex systems are collected step by step into a hierarchical system in order for a computer or a human is able to manage the systems. In other words, it has been proposed a control strategy that receives a signal or a behavior of an end device located at the level 0 in order to grasp or manage the state by a human or a data analysis, narrows down the items to be managed, and perform control by providing feedback. However, in order to perform optimization on the entirety of the water treatment system on the basis of AI using ML, there is a need to optimize a control loop for each layer, and, the current situation is that each of the device are not comprehensively controlled and overall optimization has not been achieved.

Furthermore, because of the hierarchical structure, it is far from achieving the overall optimization of the water treatment system that accounts for an addition of a device or a replacement across different layers related to a combination of systems located at a lower level, that is, devices at the level 0. In addition, in terms of cooperation of a plurality of water treatment systems, it is difficult to divert the data on each of the devices, accumulation of data for AI to train and analyze operation records at other facilities is insufficient. A device that uses a simulator has been proposed as an operation support device in the water treatment system (facility), it is merely a simulator that imitates the actual facility, it is hard to say that the actual facility has been optimized as a whole.

Accordingly, in light of the problems in the water treatment system 200 that is recently used, in the first embodiment, the water treatment system 1 that is able to implement an optimum automate operation of the water treatment system by controlling a water treatment process with respect to the edge computer 40 from an outside of the actual facility by using machine learning, a simulation, a virtualization technology, and the like will be described.

### Functional configuration of water treatment system 1

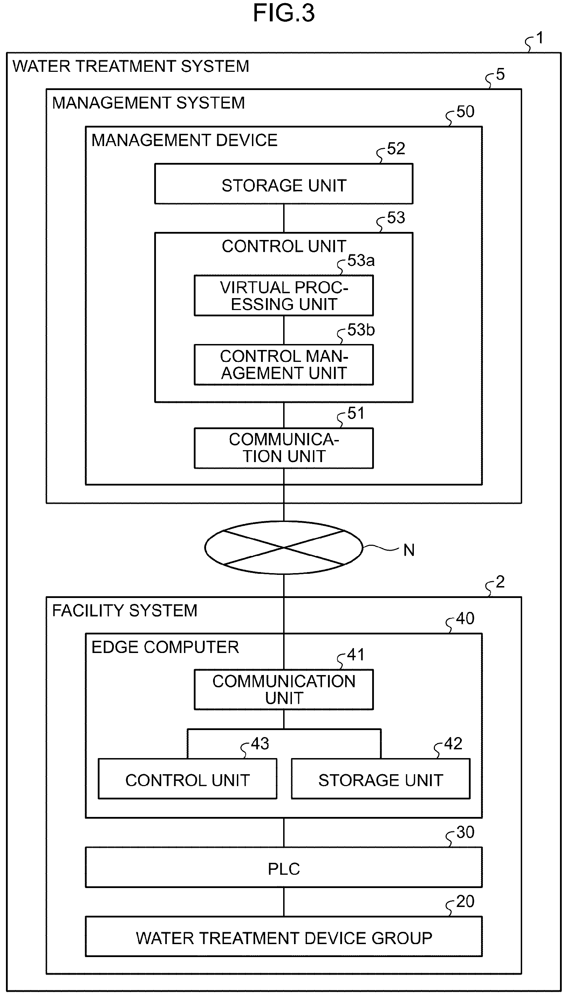

FIG. 3 is a functional block diagram illustrating a functional configuration of the water treatment system 1 according to the first embodiment. As illustrated in FIG. 3, the water treatment system 1 includes the facility system 2 and the management system 5.

### Configuration of facility system 2

The facility system 2 is a system that performs the water treatment process, and includes the water treatment device group 20, the PLC 30, and the edge computer 40. The facility system 2 is not constituted to have a hierarchical functional system configuration, but is constituted of modules that perform minimal operation control and that includes each of the water treatment devices and the edge computer 40. The module may be arranged and assembled so as to be directly controllable from the management system 5 (Plant-Level-System and Software).

The water treatment device group 20 includes the water treatment devices each of which performs the water treatment process including the process of filtration, disinfection, piping, measurement, and the like. For example, the water treatment device group 20 includes a Membranes UF-RO 20a, an UVAOP Ozone 20b, the Mechanical components 20c, the Control H&S 20d, and the like. Moreover, each of the water treatment devices are able to be freely arranged in parallel, in series, or in a multiple configuration manner in the module. In addition, the module may include not only the water treatment devices but also an analysis device that is able to perform a sampling, and that is able to break down, and analyze the quality of water and the properties of water.

The PLC 30 is one example of a device that gives various kinds of instructions to each of the devices included in the water treatment device group 20 and performs sequence control. For example, the PLC 30 performs various kinds of control related to the water treatment process including a change in water temperature, control of opening and closing a valve, control of a water volume, and the like with respect to each of the water treatment devices in accordance with a logic (control logic) including control of the PID or the like that has been defined in advance at the initial stage such as a system design stage or an operation start-up stage of the water treatment system, and then transmits the result (device information) of the control to the edge computer 40.

Furthermore, the PLC 30 performs a modification, an addition, a change, and a deletion to logic or the like in accordance with an instruction received from the edge computer 40 that is located above a higher level. Then, the PLC 30 performs various kinds of control, such as a change in water temperature, control of opening and closing a valve, control of a water volume, and the like with respect to the updated logic or the like.

The edge computer 40 is one example of a device that performs operation control of the water treatment process in the facility system 2 on the basis of the result of the operation that has been performed, by each of the water treatment device, in units of control of the water treatment process. The edge computer 40 includes a communication unit 41, a storage unit 42, and a control unit 43.

The communication unit 41 is a processing unit that controls communication with the other devices, and is implemented by, for example, a communication interface, or the like. For example, the communication unit 41 receives data that is related to the water treatment process and that includes a state, a control result, or the like from each of the water treatment devices included in the water treatment device group 20, and receives various kinds of data from the management device 50. Furthermore, the communication unit 41 transmits various kinds of data including a control instruction or the like to the PLC 30, and transmits various kinds of data related to the water treatment process or various kinds of data related to control of the PLC 30 to the management device 50.

The storage unit 42 is one example of a processing unit that stores therein various kinds of data, a program that is executed by the control unit 43, or the like, and is implemented by, for example, a memory, a hard disk, or the like.

The control unit 43 is a processing unit that manages the entire of the edge computer 40, and is implemented by, for example, a processor, or the like. Specifically, the control unit 43 uses device information that is related to the operating status of each of the water treatment devices included in the facility system 2 to which the control unit 43 belongs, and optimize the water treatment process performed in the facility system 2 to which the control unit 43 belongs.

For example, one example of the device information includes information including information indicating whether or not a normal operation is being performed for each water treatment device, information on the content of the process performed on the basis of the current set value (for example, a water volume, a temperature, a degree of opening or closing of a valve, etc.) for each water treatment device, information on control content instructed from the PLC 30 for each water treatment device, or the like.

Then, the control unit 43 generates, on the basis of each of the pieces of the device information, a first condition that is related to the water treatment process performed in the facility system 2. After that, the control unit 43 outputs, in accordance with the first condition, execution of the process, a change in the process, or the like to the PLC 30. Moreover, an example of the first condition includes an operation condition, such as quality of water, disinfection time, or an amount of production, that is able to be controlled in the facility system 2, and that is within a specification range conforming to the condition received from a client at the time of a design stage of the facility system 2, or the like.

As a specific example, the control unit 43 acquires, from each of the water treatment devices, a status of the water treatment process, an operating status of each of the water treatment devices, or the like. Furthermore, the control unit 43 acquires, from the PLC 30, an execution result of the logic or the like performed by the PLC 30, or the like. Then, the control unit 43 performs a simulation or a prediction on the basis of the machine learning model performed by using each of the pieces of acquired data, and then, acquires a prediction result of the item, such as a state of the water treatment process, a degree of a risk, a cost, that is designated in advance. After that, the control unit 43 perform a change in the control content of the control performed by the PLC 30 to, or the like in accordance with the prediction result.

In more detail, in a case where it is predicted that an amount of production decreases, the control unit 43 increases the degree of the opening of the valve in order to increase an amount of production, or activates temperature adjustment device in which an alarm output of an abnormal high temperature has been predicted in a few hours.

In other words, the control unit 43 (the edge computer 40) is able to perform the control of the water treatment system 1 for performing an optimization operation in order to maintain the amount of production, or in order to perform a cost reduction or a stable operation within a specification range that has been defined in advance at the time of a design stage of the facility system 2.

Furthermore, the control unit 43 is also able to perform a change, an addition, or the like of the logic or the like included in the PLC 30 by performing optimization on the water treatment process included in the facility system 2 to which the control unit 43 belongs, in accordance with an instruction received from the management system 5 (Plant-Level-System and Software). For example, the control unit 43 adds the logic for increasing a water volume or the like in order to increase the amount of production, changes the threshold of the temperature abnormality that is set in the existing logic or the like to a new threshold that has been newly set on the management system 5 side, or deletes some logic or the like in order to reduce a cost.

In other words, the control unit 43 (the edge computer 40) is also able to perform control of the water treatment system 1 in order to perform the optimization operation beyond the specification range that has been defined in advance at the time of a design stage of the facility system 2 in accordance with an instruction received from the management system 5 (Plant-Level-System and Software). Although, the example is just an example, the instruction from the management system 5 (Plant-Level-System and Software) may be within a specification range that has been defined in advance at the time of a design stage of the facility system 2.

### Configuration of management system 5

As illustrated in FIG. 3, the management system 5 includes the management device 50 that is implemented by a physical machine or a virtual machine. The management device 50 includes a communication unit 51, a storage unit 52, and a control unit 53.

The communication unit 51 is a processing unit that controls communication with the other device, and is implemented by, for example, a communication interface, or the like. For example, the communication unit 51 receives control content of the control performed by the PLC 30 and various kinds of data occurring in the facility system 2 from the edge computer 40. Furthermore, the communication unit 51 transmits various kinds of data that have been generated by the control unit 53 to the edge computer 40.

The storage unit 52 is one example of a processing unit that stores therein various kinds of data, a program that is executed by the control unit 53, or the like, and is implemented by, for example, a memory or a processor.

The control unit 53 is a processing unit that manages the entire of the management device 50, and is implemented by, for example, a processor, or the like. Specifically, the control unit 53 includes a virtual processing unit 53a and a control management unit 53b, and performs operation control of the water treatment process that is performed in the facility system 2 via the edge computer 40.

The virtual processing unit 53a is a processing unit that acquires the data related to the operating status of the water treatment process performed in the facility system 2 from the edge computer 40, and that performs a simulation of the water treatment process by using each of the water treatment devices that have been virtualized by using the virtualization technology and the acquired data. In other words, the virtual processing unit 53a corresponds to the digital twin 50a illustrated in FIG. 1, and virtually constitutes the virtual system that simulates the same fluctuation as that of the facility system 2 that is the actual facility.

The control management unit 53b is a processing unit that performs control of a preprocessing process performed in the facility system 2 via the edge computer 40. Specifically, the control management unit 53b corresponds to the AI engine 50b illustrated in FIG. 1, and performs a simulation performed by the virtual processing unit 53a in a case of an occurrence of a change in specifications of the facility system 2, a request change, a change in demand for a total amount of water to be generated, or the like. Then, the control management unit 53b performs, on the basis of the simulation result, a change in the logic or the like that is currently performed in the PLC 30, or the like.

For example, the control management unit 53b acquires the process information related to the operating status on the water treatment process from the edge computer 40 included in the facility system 2, and generates the control content that optimizes the entire of the facility system 2 on the basis of the acquired process information. Then, the control management unit 53b outputs the control content to the edge computer 40 included in the facility system 2. Moreover, an example of the process information includes the control content that has been instructed by the edge computer 40 to the PLC 30, an execution status on the water treatment process that has been performed on the basis of the subject control content, the content of the simulation that has been performed by the virtual processing unit 53a (the digital twin 50a), and the like.

As one example of the optimization, the control management unit 53b is able to perform various kinds of predictions related to the water treatment process performed in the facility system 2 by using a trained machine learning model or the like. For example, the control management unit 53b generates a second condition that is related to the water treatment process by using various kinds of data that have been acquired, generated, and simulated by the virtual processing unit 53a (the digital twin 50a). Then, the control management unit 53b notifies the edge computer 40 of the control content in accordance with the second condition. As a result of this, the edge computer 40 performs a change in the control content, or the like via the PLC 30.

Moreover, as the second condition, operation content or the like conforming to the information that has been designated or the like from the outside of the facility system 2 is included. For example, the control management unit 53b performs a simulation by using the virtual processing unit 53a (the digital twin 50a) in a case where a change in specifications of a client occurs outside the specification range of the facility system 2, in a case where an improvement suggestion to a client including a cost or the like is made, or the like. After that, if a simulation result has been approved by the client or the like, the control management unit 53b outputs an instruction to change the logic or the like, the changed logic, or the like to the edge computer 40 in accordance with the result of the simulation.

### Configuration of measurement device

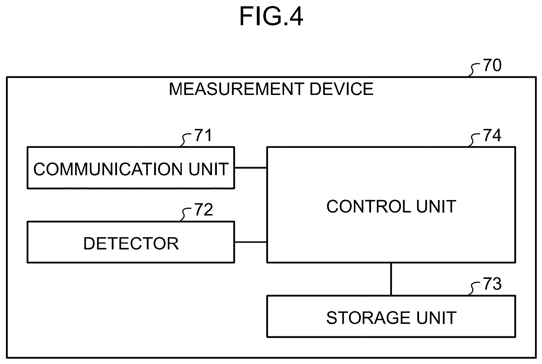

A configuration of a measurement device 70 will be described with reference to FIG. 4. The measurement device 70 functions as the Control H&S 20d. For example, the Control H&S 20d illustrated in FIG. 1 may be replaced with the measurement device 70.

The measurement device 70 illustrated in FIG. 4 acquires information related to quality of water, a water volume, a water temperature, a water pressure corresponding to the target for machine learning. With the measurement device 70, the water treatment system 1 is able to acquire more reliable information with suitable for the machine learning as compared with a conventional technology.

For example, in the conventional technology, in order to acquire an accurate measurement value, there is a need to frequently perform calibration of a measurement device, a replacement of an internal standard solution and measurement-related component, or the like. This goes against the purpose of labor savings through an autonomous operation performed by using AI control, and thus leads to a reduction in the efficiency of the operation of the water treatment system 1.

As illustrated in FIG. 4, the measurement device 70 includes a communication unit 71, a detector 72, a storage unit 73, and a control unit 74.

The communication unit 71 is a processing unit that controls communication with the other device, and is implemented by, for example, a communication interface, or the like.

The detector 72 is a detector that detects information related to water. The information related to water is, for example, quality of water, a water volume, a water pressure, a water temperature, or the like.

The storage unit 73 is one example of a processing unit that stores therein various kinds of data, a program executed by the control unit 74, or the like, and is implemented by, for example, a memory, a hard disk, or the like.

The control unit 74 is a processing unit that manages the entire of the measurement device 70, and is implemented by, for example, a processor, or the like.

Here, the detector 72 has a configuration that reduces the effects of contact with water, and performs detection related to water. Furthermore, the control unit 74 performs an arithmetic operation on the basis of the detection result obtained by the detector 72 with respect to water in the water treatment process. For example, the control unit 74 performs a training of a machine learning model by using the detection result obtained by the detector 72 as training data.

As a result of this, a measurement device 10 is able to suppress contamination or a deterioration as a result of a part of the device coming into contact with a measurement solution, reduce a personnel or time cost, and improve the efficiency of the operation of the water treatment system 1.

For example, the detector 72 is a surface scatter turbidity meter with a contactless type. The surface scatter turbidity meter with a contactless type does not come into contact with water to be treated (measurement solution) at the time of a quality of water measurement, and is unaffected by a stain. Furthermore, TB830D and FLXA402T are known as the surface scatter turbidity meter with a contactless type (see Reference Literature 1).

Reference Literature 1: Surface scatter turbidity meter TB830D, FLXA402T (URL: https://www.yokogawa.co.jp/solutions/products-and-services/measurement/analyzers/liquid-analyzers/turbidity-analyzer-color-monitor/tb830d/#%E8%A9%B3%E7%B4%B0))

The measurement device 10 is able to acquire turbidity information by merging the surface scatter turbidity meter with the digital converter. Furthermore, the measurement solution that is to be detected by the detector 72 may be supply water that is supplied to the Filtration Systems 20e and the Disinfection Systems 20f, or may be treated water that has been processed by the Filtration Systems 20e and the Disinfection Systems 20f.

The turbidity that has been detected by the detector 72 utilized in a breakdown obtained by the Testing and Analysis 20g, and utilized in an analysis obtained by the edge computer 40, the digital twin 50a, and the AI engine 50b. For example, the management system 5 is able to acquire turbidity from the facility system 2 via the edge computer 40.

Furthermore, the breakdown and the analysis performed by the detector 72 using the detection result may be performed by the control unit 74. In the following, the description will be given on the assumption that the control unit 74 performs the process related to the breakdown and the analysis. However, the subject of the process performed by the control unit 74 may be replaced with the Testing and Analysis 20g, the edge computer 40, the digital twin 50a, the AI engine 50b, and the like.

The turbidity increases in accordance with the amount of dissolved an inorganic substance (silt, sandiness, or metal oxide), an organic substance, a microorganism, and a metabolite. When a detector is stained caused by precipitation of oxidation products, deposition and adhesion due to interaction with a highly viscous substance, or the like, it is not possible to stably detect turbidity. As a result of this, a normal analysis is hindered, frequent cleaning or calibration of the detector is needed.

In contrast to this, by using the detector 72 as the surface scatter turbidity meter with the contactless type, it is possible to avoid an obstruction of the analysis caused by a stain, and avoid frequent cleaning and calibration. In addition, with the detector 72, it is possible reduce a labor cost and a maintenance cost.

Specifically, the detector 72 detects turbidity in the supply water as a target in a membrane treatment of a Microfiltration (MF) membrane, an Ultrafiltration (UF) membrane, and a Reverse Osmosis (RO) membrane. The turbidity is a quality of water index that suggests a blockage load (filtration resistance) in these membrane treatments, and is important information with respect to the filtration resistance to be recognized in order to optimize the operation of the membrane.

The control unit 74 is able to calculate a presumption of the filtration resistance R by using Darcy's law below. In the Darcy's law, the filtration resistance R is given by Expression (1) below on the basis of an intermembrane differential pressure P that is a difference between primary and secondary of the membranes by taking into consideration a driving pressure (a pump thrust pressure on the membrane primary side, or a suction pressure on the membrane secondary side), a permeation flux J indicating a quantity of permeation per unit of a membrane area, and a degree of viscosity (viscous coefficient) u of a fluid per water temperature.
$R = P / \left(uJ\right)$

Furthermore, the filtration resistance R is given by Expression (2) on the basis of resistance Rm inherent in the membrane, and a resistance Rc caused by a cake layer that is formed in the membrane due to a stain or a clogging.
$R = Rm + Rc$

The control unit 74 calculates the resistance Rc. As a result of grasping and predicting the tendency of the behavior of the resistance Rc in an optimum operation of the membrane filtration, it is possible to perform optimum washing.

Here, the resistance Rc is highly correlated with the turbidity. For example, the control unit 74 causes a machine learning model to train the relationship between the turbidity that has been detected by the detector 72 and the resistance Rc. As a result of this, the control unit 74 is able to calculate a filtration resistance on the basis of the turbidity that has been measured by the surface scatter turbidity meter and that is related to the supply water that is supplied to the membrane in the water treatment process and on the basis of the resistance inherent in the membrane.

Furthermore, the turbidity generally represents the degree of water turbidity, but, in a case where reclaimed water, such as sewage treated water, or seawater-derived water is supplied to the membrane treatment, the influence of microorganism contained within the turbidity becomes greater on a behavior and a tendency of the resistance Rc. Accordingly, in order to prevent biological proliferation on the surface of the membrane correlated with the resistance Rc, it is common practice to utilize a chlorine agent, such as sodium hypochlorite, to suppress proliferation. On the other hand, an excessive injection of chlorine agent leads to an increase in chemical consumption and deterioration of a membrane material, so that in the optimum operation of the membrane, it is also perform a process of suppressing the biological proliferation and suppressing an increase in the resistance Rc.

In order to optimize a chlorine injection ratio in accordance with the tendency or the prediction of the behavior of the resistance Rc, the control unit 74 may also perform machine learning by adding a measurement of residual chlorine concentration and measurement values of pH and Oxidation-Reduction Potential (ORP) to the turbidity information.

In a case where the measurement of the residual chlorine concentration is performed, the detector 72 is a free available chlorine meter based on polarography included in the electric potential difference measurement. The free available chlorine meter based on the polarography does not need a reagent and also does not need an adjustment, and, in addition, allows for a reduction in replacement and maintenance man-hour.

DPD (diethyl-p-phenylenediamine) colorimetric analysis is commonly used to measure combined chlorine and free chlorine concentration that are residual chlorine in water. On the other hand, this method needs several minutes for the measurement, the colorimetric method relies on an oxidation reaction, so that there is a problem in that, if a metal ion (for example, manganese) dissolved in water coexists, the metal ion is combined with substances other than residual chlorine. In addition, there is a possibility that a detected cell is contaminated by the subject oxidation products.

On the other hand, by applying the free available chlorine meter based on the polarography to the detector 72, the control unit 74 is able to solve the above described problem by performing, instead of the DPD colorimetric method, a measurement method that is based on an electrochemical measurement method, that is, for example, a polarographic method. For example, the detector 72 may be a non-reagent type free available chlorine meter described in Reference Literature 2.

Reference Literature 2: Non-reagent type free available chlorine meter "FC800D / FLXA402T" (URL: https://products.kanaden.co.jp/product/detail/349/?shop=24)

Similarly, in a case where pH and ORP measurements are performed, it is preferable that the detector 72 is resistant to a temporal change caused by a stain, a deterioration, or the like, and has a function of periodical cleaning to maintain the performance. For example, the detector 72 is a detector that is used for pH or ORP and in which a liquid junction section is protected by a coating (for example, see Reference Literature 3).

Reference Literature 3: Chemical cleaning pH measurement system PH8SM3, PH8HS3 (URL: https://www.yokogawa.co.jp/solutions/products-and-services/measurement/analyzers/liquid-analyzers/ph-analyzers/operating-unit-for-chemical-cleaningsystem-ph8sm3/)

### Flow of process

In the following, one example of the flow of the process performed in the facility system 2 and one example of the flow of the process performed in the management system 5 will be described.

### Process performed in facility system 2

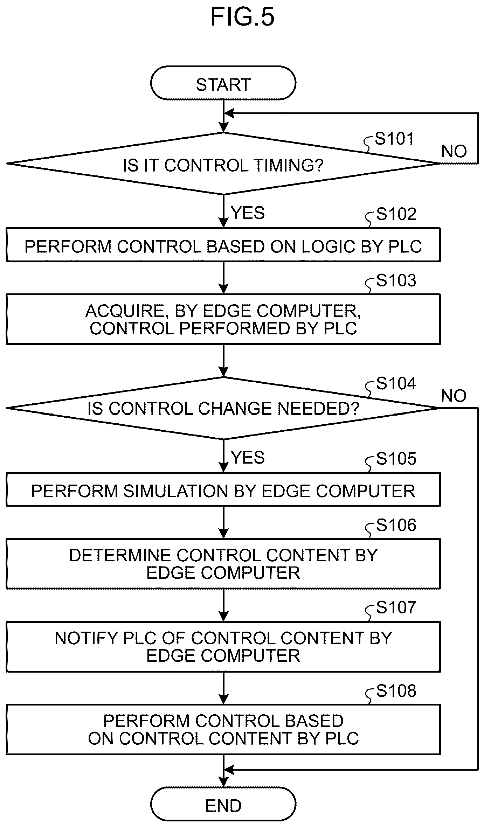

FIG. 5 is a flowchart illustrating the flow of the process performed in the facility system 2. As illustrated in FIG. 5, when it is a predetermined control timing (Yes at Step S101), the PLC 30 performs control of the water treatment process on the basis of the set logic or the like (Step S102). Then, the edge computer 40 acquires the control result obtained by the PLC 30 (Step S103), detects, on the basis of the control result obtained by the PLC 30, abnormality, occurrence of deviation from a normal value, or the like, and determines whether or not a control change is needed (Step S104).

Here, if the edge computer 40 determines that the control change is needed (Yes at Step S104), the edge computer 40 performs a simulation or the like (Step S105), and determines the control content of the control that is to be performed as a countermeasure (Step S106).

Then, the edge computer 40 notifies the PLC 30 of the control content (Step S107), and the PLC 30 performs, on the basis of the notified control content, a change in the logic or the like that is being set, and performs control of the water treatment process (Step S108).

### Process performed in management system 5

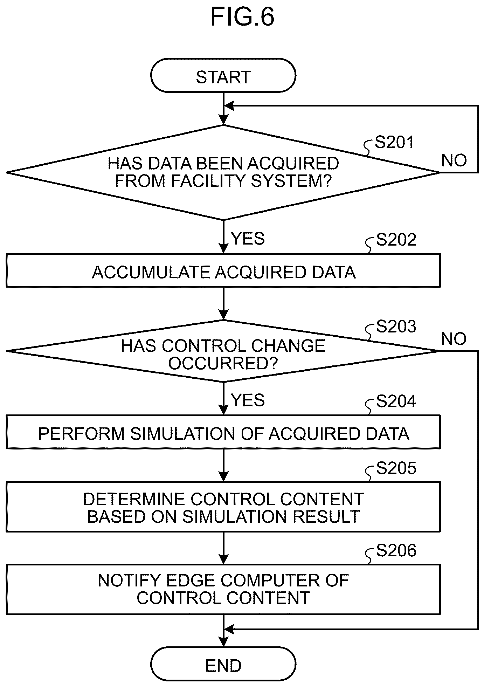

FIG. 6 is a flowchart illustrating the flow of the process performed in the management system 5. As illustrated in FIG. 6, when the management system 5 acquires data on the state related to the water treatment process, a processing result, or the like from the facility system 2 via the edge computer 40 (Yes at Step S201), the management system 5 accumulates the acquired data (Step S202).

Then, if a control change including a change in demand, a setting change, a request change, an abnormal circumstance, and the like occurs (Yes at Step S203), the management system 5 performs the simulation that is related to the water treatment process, that is obtained by the virtual system, that is performed by using the acquire data, and that has been generated by the virtual processing unit 53a (the digital twin 50a) (Step S204).

After that, the management system 5 uses a table or the like in which a simulation result, a design change, and the like are associated with each other, and then determines the control content for performing improvement of the water treatment process performed in the facility system 2, or for performing the design change (Step S205).

Then, the management system 5 notifies the edge computer 40 included in the facility system 2 of the control content (Step S206). As a result of this, the edge computer 40 performs the change in logic of the PLC 30, and the PLC 30 performs a process in accordance with the new logic or the like, whereby the change in the water treatment process or the like is performed. Moreover, the management system 5 is also able to the control content that has been generated by the simulation or the like to the management device, a display, or the like.

### Process performed in control unit 74

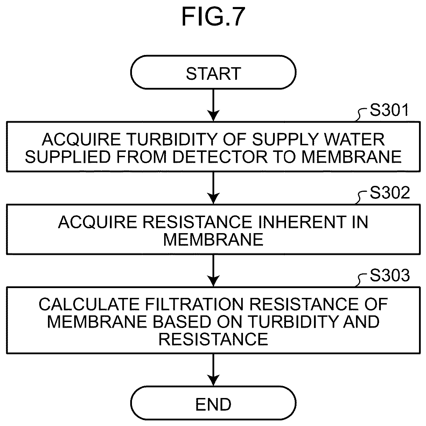

As an example of the process performed in the control unit 74, the flow of the process of calculating the filtration resistance of a membrane on the basis of turbidity will be described with reference to FIG. 7. FIG. 7 is a flowchart illustrating the process performed by the measurement device.

As illustrated in FIG. 7, first, the control unit 74 acquires turbidity of supply water supplied from the detector 72 to the membrane (Step S301). Furthermore, the control unit 74 acquires the resistance inherent in the membrane (Step S302).

Then, the control unit 74 calculates the filtration resistance of the membrane on the basis of the turbidity and the resistance (Step S303). For example, the control unit 74 is able to presume the resistance Rc caused by the cake layer from the turbidity by using the trained machine learning model, and is able to calculate the resistance of the membrane on the basis of the presumed resistance Rc and the resistance inherent in the membrane.

### Effects

As described above, the water treatment system 1 according to the first embodiment is able to flexibly add more module with respect to an addition request for a device according to demand. The water treatment system 1 is able to divert each other the data collected from each of the water treatment devices that are used in the various kinds of water treatment facilities without depending on the configuration of the water treatment device, so that it is possible to implement optimum control.

The water treatment system 1 utilizes the edge computer 40 and performs management at the module level, so that the water treatment system 1 is able to instantaneously calculate the module to be operated or a combination of the modules without depending on an experience or the like, and is able to automatically suggest the result. The water treatment system 1 is able to presume the input and output values without performing a test in the actual facility by simulating, in the virtual system, a coping method with respect to an unexpected environmental fluctuation in the facility with little environmental fluctuation.

Furthermore, the detector 72 included in the measurement device 10 has a configuration that reduces the effect of contact with water. Furthermore, the measurement device 10 performs an arithmetic operation on the basis of the detection result obtained by the detector with respect to water in the water treatment process. As a result of this, the measurement device 10 is able to suppress contamination or a deterioration as a result of a part of the device coming into contact with a measurement solution, reduce a personnel or time cost in order to cope with the contamination or the deterioration, and improve the efficiency of the operation of the water treatment system.

### Second Embodiment

Incidentally, in the first embodiment, the description has been given as an example in which, in the facility system 2, the single piece of the edge computer 40 controls the entire of the water treatment device group 20 via the PLC 30, but the example is not limited to this. For example, it is also possible for the management system 5 perform control of each of the water treatment devices by installing an edge computer with respect to each of the water treatment devices included in the water treatment device group 20. Accordingly, in a second embodiment, an example in which the management system 5 directly performs control of each of the water treatment devices and constituted modules included in the actual facility will be described.

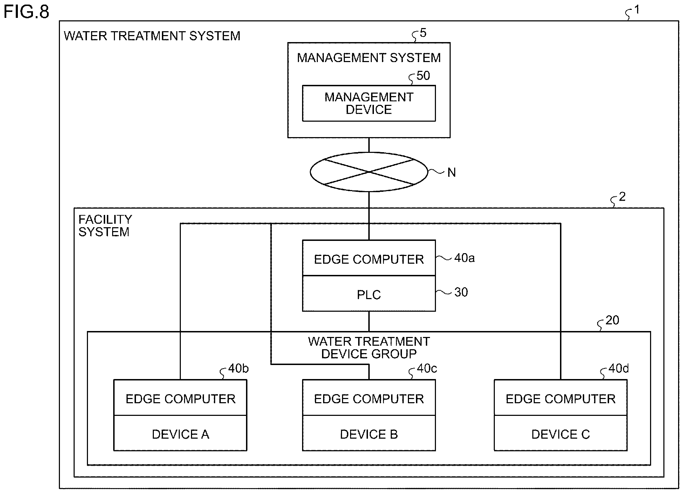

FIG. 8 is a diagram for explaining an architecture of the water treatment system 1 according to the second. As illustrated in FIG. 8, the water treatment system 1 according to the second embodiment includes, similarly to the first embodiment, the facility system 2 and the management system 5.

The second embodiment is different from the first embodiment in that an edge computer 40a is provided in the PLC 30 and edge computers 40b, 40c, and 40d are respectively provided in a device A, a device B, and a device C that are included in the water treatment device group 20, all of which are included in the facility system 2. Moreover, each of the edge computers 40a, 40b, 40c, and 40d has the same function as that of the edge computer 40 described above in the first embodiment.

For example, the management system 5 acquires data on a state, a control status, a control result, and the like of each of the PLC 30 and the water treatment device from the respective edge computers 40a, 40b, 40c, and 40d. Then, the management system 5 uses the virtual system, AI (machine learning model), or the like, and generates control content that is related to the operation of each of the water treatment devices. Then, the management system 5 notifies each of the edge computers 40a, 40b, 40c, and 40d of the generated control content.

As a result of this, each of the edge computers 40a, 40b, 40c, and 40d performs control in accordance with the control content notified from the management system 5 for each PLC or device. In this way, as a result of the management system 5 (the AI engine 50b) directly performs control of the minimum unit of water treatment device in units of modules, it is possible to perform further optimum control at high speed.

Furthermore, the management system 5 is able to obtain a solution for optimization of the entire of the treatment system, so that it is possible to improve an optimum operation performed by each of the edge computers constituting the respective modules in units of water treatment devices, and it is possible to improve a combination of the modules. Furthermore, the management system 5 is able to directly transmit an instruction to each of the water treatment devices, so that it is possible to improve an operation speed with respect to each of the water treatment devices. Furthermore, it is possible to improve a degree of freedom of a combination of the water treatment devices, improve a degree of freedom of a combination of parameters, and consider a relationship of cause and effect between the end devices. The management system 5 is able to appropriately and promptly derive a countermeasure with respect to an unintended fluctuation.

### Third Embodiment

Incidentally, in the first embodiment and the second embodiment, the description has been given as an example in which the single piece of the management system 5 performs management control of the water treatment system (the facility system 2), but the example is not limited to this. For example, it is possible to comprehensively control the entire of the water treatment system as a result of the single piece of the management system 5 managing an integrated system constituted from a combination of a plurality of water treatment devices as a single water treatment device.

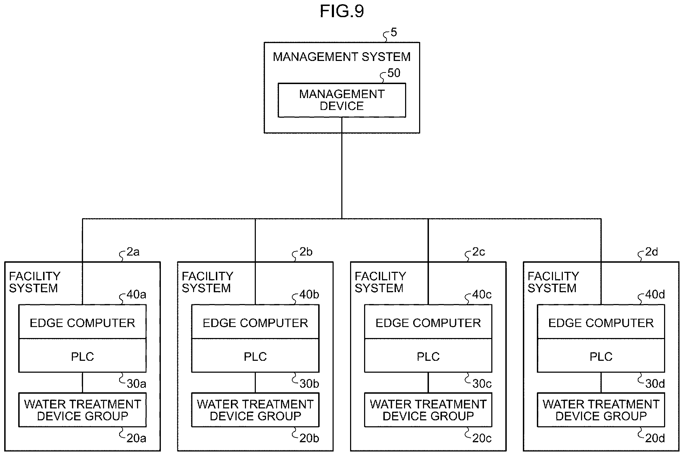

FIG. 9 is a diagram for explaining an architecture of the water treatment system 1 according to a third embodiment. As illustrated in FIG. 9, the water treatment system 1 according to the third embodiment includes the management system 5 and a plurality of facility systems 2a, 2b, 2c, and 2d.

Here, the management system 5 has the same function as that of the management system 5 described above in the first embodiment, and each of the facility systems 2a, 2b, 2c, and 2d has the same function as that of the facility system 2 described above in the first embodiment.

Furthermore, the facility system 2a includes a water treatment device group 20a, a PLC 30a, and the edge computer 40a, whereas the facility system 2b includes a water treatment device group 20b, a PLC 30b, and an edge computer 40b. Furthermore, the facility system 2c includes a water treatment device group 20c, a PLC 30c, and the edge computer 40c, whereas the facility system 2d includes a water treatment device group 20d, a PLC 30d, and an edge computer 40d.

Moreover, each of the water treatment device groups 20a, 20b, 20c, and 20d has the same configuration as that of the water treatment device group 20 described above in the first embodiment. Each of the PLCs 30a, 30b, 30c, and 30d has the same function as that of the PLC 30 described above in the first embodiment. Each of the edge computers 40a, 40b, 40c, and 40d has the same function as that of the edge computer 40 described above in the first embodiment.

With this configuration, the management system 5 collects pieces of data not only from the single piece of water treatment system but also from the plurality of water treatment systems. For example, the management system 5 acquires various kinds of data related to the water treatment process from each of the facility systems 2a, 2b, 2c, and 2d. Then, the management system 5 generates the control content related to an integrated operation index of the plurality of facility systems, on the basis of the operating status or the like of each of the water treatment processes performed in the plurality of respective facility systems. After that, the management system 5 performs the operation control of the water treatment process that is performed by each of the edge computers included in the associated facility systems in accordance with the control content.

For example, the water treatment systems in which each of the facility systems 2 is installed in the same region is assumed. In this state, the management system 5 is able to change the control content to improve an operation rate of the facility system 2b that has enough capacity to increase an amount of production even when an increase in amount of production in the entire of the system is instructed. As a result of this, the management system 5 is able to increase the amount of production by distributing the load applied to the entire of the water treatment systems, so that the management system 5 is able to avoid a risk associated with downtime of one of the water treatment systems.

Furthermore, in the above described state, even when an increase in amount of production in the facility system 2a has been instructed, the management system 5 is able to change the control content to improve the operation rate of the facility system 2c in which the operation cost is the smallest. As a result of this, the management system 5 is able to implement the increase in amount of production while performing the cost reduction of the entire of the water treatment systems.

Furthermore, the management system 5 is able to integrally manages the facility systems 2 by collecting the operational status of each of the facility systems 2, capital investment, a cost, and the like. As a result of this, the management system 5 is able to propose a client to use another facility system in a case where the operational load of a certain facility system is extraordinarily high.

Furthermore, the management system 5 produces the facility system 2a and the facility system 2b that satisfy a request from the client, and performs the water treatment process. After that, even when there is a need to generate a new facility system in association with the request from the client, the management system 5 is able to cope with the request from the client while reducing the cost of generating the new system by proposing the use in the facility system 2d that has the same configuration as that of the facility system 2b.

As described above, in the water treatment system 1 according to the third embodiment, it is possible to perform optimization by diverting the pieces of data each other collected from the plurality of water treatment systems without depending on each of the water treatment systems (facility systems).

### Fourth embodiment

In the above explanation, a description has been given of the embodiments according to the present invention; however, the present invention may also be implemented with various kinds of embodiments other than the embodiments described above.

### Value, etc.

The number of water treatment devices, the number of facility systems, the specific example of the control content, and the like described above in the embodiment are only examples and are able to be changed. Furthermore, the order of the processes of the flowchart described in the embodiment is also able to be changed as long as they do not conflict with each other.

### System

The flow of the processes, the control procedures, the specific names, and the information containing various kinds of data or parameters indicated in the above specification and drawings can be arbitrarily changed unless otherwise stated. For example, the water treatment system 1 may be configured such that the actual facility may automatically simulate the optimized virtual system configuration calculated by the management system 5 (Plant-Level-System and Software).

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

In addition, all or any part of each of the processing functions performed by each of the devices can be implemented by a Central Processing Unit (CPU) and by programs analyzed and executed by the CPU or implemented as hardware by wired logic.

### Hardware

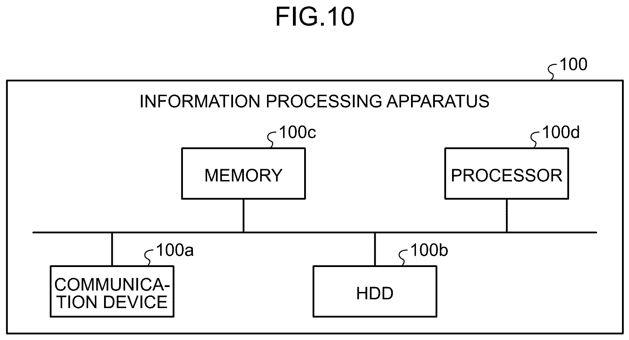

In the following, an example of a hardware configuration of the computer described above in the embodiment will be described. Moreover, it is assumed that each of the management device 50, the edge computer 40, and the measurement device 70 has the same hardware configuration, so that, here, the hardware configuration will be explained by using an information processing apparatus 100. FIG. 10 is a diagram for explaining an example of the hardware configuration. As illustrated in FIG. 10, the information processing apparatus 100 includes a communication device 100a, a hard disk drive (HDD) 100b, a memory 100c, and a processor 100d. Furthermore, each of the units illustrated in FIG. 10 is connected by a bus or the like with each other.

The communication device 100a is a network interface card or the like, and performs communication with another server. The HDD 100b stores therein a program and DB that cause the functions illustrated in FIG. 3 to operate.

The processor 100d operates the process that executes each of the functions described above in FIG. 3 or the like by reading the program that executes the same processes as those performed by each of the processing units illustrated in FIG. 3 from the HDD 100b or the like and loading the read program in the memory 100c. For example, in a case of the management device 50 as an example, this process executes the same functions as those performed by each of the processing units included in the management device 50. Specifically, the processor 100d reads, from the HDD 100b or the like, the program having the same functions as those performed by the virtual processing unit 53a, the control management unit 53b, and the like. Then, the processor 100d executes the same processes as those performed by the virtual processing unit 53a, the control management unit 53b, and the like.

In this way, the information processing apparatus 100 operates as an information processing apparatus that executes a measurement method and the like by reading and executing the program. Furthermore, the information processing apparatus 100 is also able to implement the same functions as those described above in the embodiment by reading the above described program from a recording medium by a medium reading device and executing the read program. In addition, the program described above need not always be executed by the information processing apparatus 100. For example, the present invention may also be similarly applied to a case in which another computer or another server executes the program or in a case in which another computer and another server cooperatively execute the program with each other.

The program may be distributed via a network, such as the Internet. Furthermore, the program may be executed by being recorded in a computer readable medium, such as a hard disk, a flexible disk (FD), a CD-ROM, a magneto-optical disk (MO), or a digital versatile disk (DVD), and being read from the recording medium by the computer.

Some examples of combinations of the disclosed technical features will be described below.

According to the present disclosure, it is possible to make an operation of a water treatment system more efficient.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A measurement device (70) comprising:
a detector (72); and
a processor, wherein
the detector (72) has a configuration that reduces effect of contact with water, and performs detection related to the water, and
the processor performs an arithmetic operation on the water in a water treatment process based on a detection result obtained by the detector (72).

2. The measurement device (70) according to claim 1, wherein the processor performs a training of a machine learning model by using the detection result obtained by the detector (72) as training data.

3. The measurement device (70) according to claim 1 or 2, wherein the detector (72) is a surface scatter turbidity meter with a contactless type.

4. The measurement device (70) according to claim 3, wherein
the processor calculates filtration resistance from
turbidity that is related to supply water that is supplied to a membrane in the water treatment process and that has been measured by the surface scatter turbidity meter, and
resistance inherent in the membrane.

5. The measurement device (70) according to claim 1 or 2, wherein the detector (72) is a free available chlorine meter based on polarography based on an electric potential difference measurement.

6. The measurement device (70) according to claim 1 or 2, wherein the detector (72) is a detector (72) that is used for pH and in which a liquid junction section is protected by a coating.

7. The measurement device (70) according to claim 1 or 2, wherein the detector (72) is a detector (72) that is used for ORP and in which a liquid junction section is protected by a coating.

8. A measurement method carried out by a computer, comprising:
acquiring a detection result that is obtained by a detector (72) having a configuration that reduces effect of contact with water and that is obtained from a water treatment process performed on the water; and
performing an arithmetic operation based on the detection result.

9. A measurement program that causes a computer to execute a process comprising:
acquiring a detection result that is obtained by a detector (72) having a configuration that reduces effect of contact with water and that is obtained from a water treatment process performed on the water; and
performing an arithmetic operation based on the detection result.
